# EUROPÄISCHE PATENTSCHRIFT

(11) **EP 3 310 660 B1**
(45) Veröffentlichungstag und Bekanntmachung des Hinweises auf die Patenterteilung: **18.09.2019**
(21) Anmeldenummer: 16713360.2
(22) Anmeldetag: 23.03.2016
(51) Int. Cl.: B64D 17/02, B64C 31/06

(54) **GLEITSCHIRM MIT AUFRICHTMITTEL**
PARAGLIDER WITH UPRIGHTING MEANS
PARAPENTE DOTE DE MOYEN DE REDRESSEMENT

(30) Priorität: 17.06.2015 EP 15172570
(43) Veröffentlichungstag der Anmeldung: 25.04.2018
(73) Patentinhaber: Juma Invention GmbH, 51429 Bergisch Gladbach (DE)
(72) Erfinder: SCHMIEDT, Heinz, 51429 Bensberg/Moitzfeld (DE)
(74) Vertreter: dompatent von Kreisler Selting Werner - Partnerschaft von Patent- und Rechtsanwälten mbB
(86) Internationale Anmeldenummer: PCT/EP2016/056415
(87) Internationale Veröffentlichungsnummer: WO 2016/128584

(56) Entgegenhaltungen:
- DE-C1- 4 114 520
- FR-A1- 2 633 248
- US-A- 3 822 844
- US-A- 3 893 641
- US-A- 4 175 722
- US-A- 5 012 993

## Beschreibung

Die Erfindung betrifft einen Gleitschirm.

Gleitschirme sind allgemein als Luftsportgeräte bekannt und in einer Vielzahl verschiedener Ausführungen kommerziell verfügbar.

Ein Beispiel eines Gleitschirms ist aus der US 4175722 bekannt, welche einen Gleitschirm mit obenliegenden Lufteintrittsöffnungen zeigt, welche durch Verschlusstücher, die über Kontrollseile gesteuert werden, wahlweise geöffnet oder geschlossen werden, um den Kurvenflug zu unterstützen.

Die wesentlichen Bestandteile eines Gleitschirms sind dabei eine Schirmkappe, Leinen und ein Gurtzeug.

Hierbei ist die Schirmkappe aus einem reißfesten und luftdichten Kunststoff, wie beispielsweise Nylon, gefertigt und bildet die Tragfläche des Gleitschirms. Die Schirmkappe ist aus einem Obersegel und einem Untersegel aufgebaut, wobei sie in einer Richtung senkrecht zur Flugrichtung in längliche Kammern aufgeteilt ist. Die Kammern sind jeweils an ihrer Hinterseite zugenäht und zeigen auf der gegenüberliegenden Vorderseite eine Kammeröffnung, durch die Luft in die Kammern eindringen kann, um diese zu befüllen. Beim Aufziehen des Gleitschirms werden die Kammern befüllt und es bildet sich ein Staudruck in den Kammern, wodurch die Schirmkappe versteift und eine feste Tragfläche bildet. Sobald an dieser Tragfläche eine Luftströmung anliegt, wird ein dynamischer Auftrieb erzeugt.

An der unteren Seite der Schirmkappe sind mehrere einzelne Leinen (auch Galerieleinen genannt) angebracht, welche jeweils paarweise zu sogenannten Stammleinen zusammengeführt werden. Einige dieser Stammleinen werden fest mit dem Gurtzeug verbunden, in dem der Pilot sitzt. Die äußeren Leinen werden zu Bremsleinen zusammengeführt und dienen dem Piloten auch zur Steuerung des Gleitschirms.

Ein Sicherheitsrisiko bei der Verwendung von Gleitschirmen sind mögliche Unfälle infolge von sogenannten "Einklappern". Bei einem Einklapper fällt ein Teil der Schirmkappe aufgrund von Luftströmungsabrissen zusammen, woraufhin der eingeklappte Teil des Schirms vom Gegenwind gegen die Leinen gedrückt wird. Zu solchen Einklappern kommt es insbesondere durch Turbulenzen oder durch eine falsche Steuerung des Gleitschirms durch den Piloten. Je nach Grad des Einklappers kann es passieren, dass der Gleitschirm entweder schlecht manövrierbar wird oder aber auch vollständig außer Kontrolle gerät. Je nach Art des Einklappers werden diese auch als Frontklapper oder Seitenklapper bezeichnet, abhängig davon, welcher Bereich der Schirmkappe einklappt. Beispielsweise klappt bei einem Frontklapper der vordere Bereich der Schirmkappe verhäuft entlang einer Einklapplinie nach unten, die typischerweise im vorderen Bereich der Schirmkappe verläuft. Diese Einklapplinie verläuft bei Frontklappern häufig entlang der Verbindungspunkte, an denen die vorderen Leinen mit dem Untersegel der Schirmkappe verbunden sind.

Alleine im Jahr 2014 wurden 60 Unfälle nach Einklappern gemeldet (Quelle: DHV-info 193, Mai-Juni 2015, ausgegeben vom Deutschen Hängegleiterverband e.V.), teilweise mit tödlichen Folgen.

Um den genannten Gefahren durch Einklapper entgegenzuwirken und die Schirmkappe möglichst kurzfristig nach einem Einklapper wieder aufzurichten, sind bei handelsüblichen Gleitschirmen Druckausgleichsöffnungen in den Kammerseitenwänden vorgesehen. Diese Druckausgleichsöffnungen werden auch "Cross-Ports" genannt.

Fallen einzelne Kammern aufgrund von Turbulenzen oder aufgrund einer Fehlsteuerung des Piloten zusammen, so können diese Kammern, ausgehend von der dem Einklapper nächst benachbarten und nicht von diesem beeinträchtigten Kammer, durch die Druckausgleichsöffnungen wieder mit Luft befüllt werden. Dadurch wird die Schirmkappe nach kleineren Einklappern sehr schnell wieder aufgerichtet, so dass der Pilot diesen Einklapper ggf. überhaupt nicht wahrnimmt. Ist jedoch eine Vielzahl von Kammern gravierend von dem Einklapper betroffen, so vergeht eine beträchtliche Zeit, bis alle Kammern wieder aufgerichtet sind, da die eingeklappten Kammern jeweils nacheinander durch benachbarte und befüllte Kammern aufgerichtet werden müssen. Im Falle eines Frontklappers über nahezu die gesamte Breite der Schirmkappe sind die Cross-Ports möglicherweise gänzlich ohne Funktion.

Der Erfindung liegt daher die Aufgabe zugrunde, die Aufrichtzeit der Schirmkappe nach einem Einklapper zu reduzieren und damit die Sicherheit des Gleitschirms zu erhöhen.

Diese Aufgabe wird erfindungsgemäß mit einem Gleitschirm gelöst, der versehen ist mit einer Schirmkappe, die ein Obersegel und ein Untersegel aufweist, wobei die Schirmkappe in mehrere längliche Kammern mit einer Längsachse unterteilt ist, wobei jede Kammer eine Vorderseite mit einer Kammeröffnung, eine verschlossene Rückseite und Seitenwände aufweist, und einem Aufrichtmittel zum passiven, d. h. automatischen Aufrichten der Schirmkappe nach einem zumindest partiellen Einklappen der Schirmkappe, wobei das Aufrichtmittel mindestens eine Lufteintrittsöffnung im Obersegel und ein Verschlusstuch aufweist, wobei das Verschlusstuch an der Unterseite des Obersegels angeordnet ist und mit dem Obersegel mindestens an einer Seite der Lufteintrittsöffnung verbunden ist, die der vorderseitigen Kammeröffnung zugewandt ist, wobei bei Eintritt von Luft durch die Kammeröffnung einer mit einer Lufteintrittsöffnung versehenen Kammer das Verschlusstuch die Lufteintrittsöffnung wegen des Staudrucks in der Kammer automatisch verschließt und im Falle einer zumindest partiell eingeklappten Schirmkappe infolge einer Verringerung des Staudrucks in der mit der Lufteintrittsöffnung versehenen Kammer das Verschlusstuch die Lufteintrittsöffnung zum Einströmen von Luft zwecks Wiederausbildung der Kammer automatisch freigibt.

Dabei sind das Obersegel und das Untersegel typischerweise aus einem Material gefertigt, das im Wesentlichen luftdicht und reißfest ist. Das Ober- und das Untersegel sind miteinander vernäht, verklebt oder verschweißt. Die durch Ober- und Untersegel gebildete Schirmkappe ist in einzelne längliche Kammern unterteilt, wobei die Seitenwände der Kammern durch das Untersegel, das Obersegel oder auch durch separate Teile gebildet sein können. Das Aufrichtmittel zum Aufrichten der Schirmkappe nach einem Einklapper weist im Wesentlichen eine Lufteintrittsöffnung im Obersegel und ein Verschlusstuch auf. Diese beiden Elemente stellen gemeinsam eine Vorrichtung zum "passiven" Öffnen und Schließen einer Kammer nach einem Einklapper zur Verfügung.

Während der gewöhnlichen Flugphase wird das Untertuch passiv durch den Staudruck in der Kammer gegen die Unterseite des Obersegels gedrückt, wodurch die Lufteintrittsöffnung verschlossen wird. Im Falle eines Einklappers wird dieser Staudruck abgebaut, da die von dem Einklapper betroffenen vorderseitigen Kammeröffnungen nicht mehr angeströmt werden. Nun kann Luft über die Lufteintrittsöffnungen einströmen, denn die Verschlusstücher, die nach Art von Rückschlagventilen arbeiten, geben diese Lufteintrittsöffnungen frei. Die seitens des Obersegels durch die Lufteintrittsöffnungen einströmende Luft füllt die Kammern innerhalb kurzer Zeit auf. Die Kammern werden dadurch aufgerichtet, so dass wieder Luft in die vorderseitigen Kammeröffnungen gelangen kann und sich in diesen Kammern wieder ein Staudruck aufbaut, wodurch das Verschlusstuch wieder gegen die Lufteintrittsöffnung gedrückt wird und diese wieder passiv verschließt. Durch diese Funktionsweise wird der Strömungsabriss schneller beseitigt und der Gleitschirm wird schneller stabilisiert. Dadurch ist der Gleitschirm innerhalb kürzester Zeit nach einem Einklapper wieder steuerbar und die Sicherheit des Gleitschirms wird dadurch erhöht.

Ein wesentlicher Vorteil des erfindungsgemäßen Gleitschirms ist, dass der Mechanismus zum Öffnen und Schließen einer Kammer nach einem zumindest partiellen Einklappen der Schirmkappe vollständig passiv erfolgt. Dies bedeutet, dass der Pilot des Gleitschirms seinerseits nicht aktiv dazu beitragen muss, um den Gleitschirm nach einem Einklapper wieder aufzurichten. Dies ist besonders deswegen vorteilhaft, da insbesondere wenig erfahrene Piloten beim Auftreten eines Einklappers zunächst erst einmal in einen Schockzustand versetzt werden und folglich eine reduzierte Reaktionsfähigkeit zeigen. Der passive Mechanismus zum Aufrichten des Gleitschirms bewirkt ein automatisches Aufrichten des Gleitschirms, so dass dieser innerhalb kurzer Zeit wieder durch den Piloten steuerbar ist.

Dabei kann die Wirkung des zuvor beschriebenen Mittels zum Aufrichten der Schirmkappe nach einem Einklapper durch verschiedene Parameter der Lufteintrittsöffnung angepasst werden. Beispielsweise können die Größe, die Anzahl und die Form der Lufteintrittsöffnungen derart gewählt werden, dass der Effekt des Aufrichtmittels nach Wunsch angepasst wird. So kann etwa durch die Wahl größerer Lufteintrittsöffnungen der zuvor beschriebene Effekt im Vergleich zu kleineren Lufteintrittsöffnungen verstärkt werden. Auch kann der Aufrichteffekt dadurch erhöht werden, dass mehrere Lufteintrittsöffnungen an verschiedenen Stellen im Obersegel vorgesehen sind. Bei der Form der Lufteintrittsöffnungen können runde, ovale, sternförmige, halbmondförmige oder längliche Formen verwendet werden.

In einer Ausführungsform der Erfindung kann vorgesehen sein, dass mindestens eine Seitenwand einer Kammer mindestens eine Luftdruckausgleichsöffnung aufweist. Diese auch als "Cross-Ports" bezeichneten Öffnungen können dann in Kombination mit den Lufteintrittsöffnungen der Kammern zu einem beschleunigten Befüllen und Aufrichten der einzelnen Kammern beitragen.

Zur weiteren Ausgestaltung der Erfindung kann vorgesehen sein, dass mindestens eine Lufteintrittsöffnung länglich bzw. schlitzförmig ausgebildet ist. Diese schlitzförmigen Öffnungen können insbesondere vorteilhaft sein, da diese sich über einen größeren Bereich der Kammer erstrecken können. Das Befüllen der Kammer ist dann besonders schnell und effizient, wenn sich zumindest ein Teil der Lufteintrittsöffnung entlang einer Einklapplinie erstreckt, an der die Schirmkappe einklappt. Besonders in diesem Bereich strömt dann die Luft senkrecht auf die Lufteintrittsöffnung, wodurch die Kammer effizient mit Luft befüllt wird.

Bevorzugt kann in einer Ausgestaltung der Erfindung vorgesehen sein, dass mindestens eine, längliche Lufteintrittsöffnung im Wesentlichen parallel oder senkrecht zu der Längsachse der Kammern ausgerichtet ist.

Lufteintrittsöffnungen parallel zur Längsachse der Kammer können besonders vorteilhaft sein, wenn diese sich über einen weiten Teil der Kammer erstrecken, da in diesem Fall bei einem frontalen oder seitlichen Einklappen der Schirmkappe die Wahrscheinlichkeit besonders hoch ist, dass die Einklapplinie zumindest teilweise durch die Lufteintrittsöffnung verläuft und am Schnittpunkt mit dieser Lufteintrittsöffnung eine besonders effiziente Befüllung der Kammer gewährleistet ist.

Senkrecht zu der Längsachse der Kammer ausgerichtete, längliche Lufteintrittsöffnungen können insbesondere für das Befüllen der Kammern nach frontalen Klappern vorteilhaft sein, wenn die längliche Lufteintrittsöffnungen an einer Stelle vorgesehen sind, an der eine Schirmkappe zunehmend einklappt, d. h. an der erwarteten Einklapplinie angeordnet sind. In diesem Fall liegen dann in zunehmendem Maße die länglichen Lufteintrittsöffnungen und die Einklapplinie verhäuft zusammen, so dass ein äußerst effizientes Befüllen der Kammern nach einem Einklapper erwartet werden kann.

Weiterhin kann in einer bevorzugten Ausgestaltung des erfindungsgemäßen Gleitschirms vorgesehen sein, dass mindestens eine längliche Lufteintrittsöffnung im Wesentlichen in einem Winkel von 45 Grad zu der Längsachse der Kammern ausgerichtet ist. Eine solche Ausrichtung mindestens einer länglichen Lufteintrittsöffnung kann insbesondere zur Aufrichtung der Schirmkappe nach seitlichen Einklappern vorteilhaft sein. Insbesondere kann hierbei vorgesehen sein, dass die im Wesentlichen in einem Winkel von 45 Grad zur Längsachse der Kammer ausgerichtete längliche Lufteintrittsöffnungen in den Bereichen vorgesehen sind, an der die Schirmkappe vermehrt einklappt.

In einer weiteren Ausführungsform der Erfindung kann vorgesehen sein, dass das Aufrichtmittel mindestens zwei längliche Lufteintrittsöffnungen aufweist, wobei die Anordnungen mindestens zweier Lufteintrittsöffnungen voneinander abweichen. Hierdurch können die Lufteintrittsöffnungen derart vorgesehen sein, dass diese für verschiedenen Szenarien und verschiedene Arten von Einklappern ausgelegt sind. Beispielsweise kann hierbei vorgesehen sein, dass längliche Lufteintrittsöffnungen auf der linken Seite der Schirmkappe und längliche Lufteintrittsöffnungen auf der rechten Seite der Schirmkappe jeweils in einem Winkel von 45 Grad zu der Längsachse der Kammern ausgerichtet sind und die länglichen Lufteintrittsöffnungen auf der linken Seite orthogonal zu den Lufteintrittsöffnungen auf der rechten Seite der Schirmkappe angeordnet sind. Dadurch wird berücksichtigt, dass bei seitlichen Einklappern auf der linken Seite der Schirmkappe die Einklapplinie im Wesentlichen orthogonal zu der Einklapplinie auf der rechten Seite verlaufen kann.

In einer bevorzugten Ausführungsform des erfindungsgemäßen Gleitschirms kann vorgesehen sein, dass die Lufteintrittsöffnungen in den Bereichen angeordnet sind, in denen es bevorzugterweise zu Front- und Seitenklappern kommen kann. Diese sogenannten Einklappbereiche können sich in Abhängigkeit vom Typ des Gleitschirms unterscheiden. Beispielsweise kann sich ein Fronteinklappbereich im vorderen Drittel oder in der vorderen Hälfte der Schirmkappe befinden. In diesem Fronteinklappbereich können beispielsweise besonders viele oder aber auch sämtliche Lufteintrittsöffnungen angeordnet sein.

Ferner kann in einer Ausführungsform der Erfindung vorgesehen sein, dass mindestens ein Verschlusstuch mindestens an einer Seite der Lufteintrittsöffnung mit dem Obersegel verbunden ist, die einer Seitenwand der Kammer zugewandt ist. Hierdurch kann die Luftströmung gezielt in die Kammer gerichtet werden, um das Befüllen und Aufrichten einer Kammer zu begünstigen.

Zur weiteren Ausgestaltung der Erfindung kann ferner vorgesehen sein, dass mindestens ein Verschlusstuch an den beiden Seiten der Lufteintrittsöffnung mit dem Obersegel verbunden ist, die den Seitenwänden der Kammer zugewandt sind. Dadurch ist die Lufteintrittsöffnung an drei Seiten mit dem Obersegel verbunden, wodurch wiederum eine Kanalisierung der in die Lufteintrittsöffnung einströmende Luft bewirkt wird. Hierdurch kann der mittlere und hintere Teil einer Kammer effizient mit Luft befüllt werden.

Weiterhin kann in einer Ausgestaltung des erfindungsgemäßen Gleitschirms vorgesehen sein, dass das Verschlusstuch mit dem Obersegel an mindestens einer Seite des Verschlusstuches vernäht ist.

Auch kann in einer Ausführungsform der Erfindung vorgesehen sein, dass das Verschlusstuch mit dem Obersegel an mindestens einer Seite des Verschlusstuchs verschweißt ist.

In einer weiteren bevorzugten Ausgestaltung des erfindungsgemäßen Gleitschirms kann vorgesehen sein, dass das Verschlusstuch mit dem Obersegel an mindestens einer Stelle des Verschlusstuches verklebt ist.

Zur weiteren Ausgestaltung der Erfindung kann vorgesehen sein, dass das Verschlusstuch aus dem gleichen Material gefertigt ist wie das Obersegel. Durch den Verzicht auf unterschiedliche Materialen bei der Fertigung des Gleitschirms kann der Gleitschirm kostengünstig hergestellt werden.

In einer weiteren Ausgestaltung der Erfindung kann vorgesehen sein, dass das Verschlusstuch aus einem anderen Material gefertigt ist als das Obersegel. Dadurch kann das Material des Verschlusstuchs derart ausgewählt werden, dass eine verbesserte Abdichtung der Lufteintrittsöffnung gewährleistet ist.

Die Erfindung wird nachfolgend anhand mehrerer Ausführungsbespiele unter Bezugnahme auf die Zeichnungen näher erläutert. Im Einzelnen zeigen dabei:
- Fig. 1: einen handelsüblichen Gleitschirm,
- Fig. 2: einen Gleitschirm nach einem seitlichen Einklappen,
- Fig. 3: einen Ausschnitt eines ersten Ausführungsbeispiels des erfindungsgemäßen Gleitschirms,
- Fig. 4: einen Ausschnitt eines zweiten Ausführungsbeispiels des erfindungsgemäßen Gleitschirms,
- Fig. 5: einen Ausschnitt eines dritten Ausführungsbeispiels des erfindungsgemäßen Gleitschirms,
- Fig. 6: einen Ausschnitt eines vierten Ausführungsbeispiels des erfindungsgemäßen Gleitschirms und
- Fig. 7: eine Draufsicht auf ein letztes Ausführungsbeispiel des erfindungsgemäßen Gleitschirms.

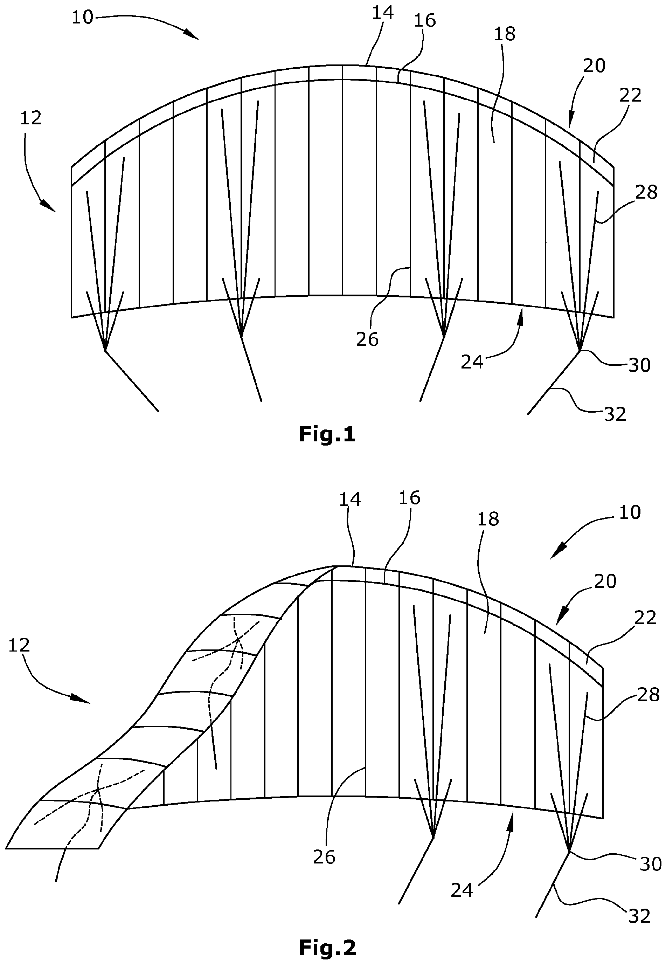

In der Fig. 1 ist ein handelsüblicher Gleitschirm 10 mit einer Gleitschirmkappe 12, bestehend aus einem Obersegel 14 und einem Untersegel 16, gezeigt. Die Schirmkappe 12 ist hier in sechszehn längliche Kammern 18 unterteilt, deren Längsachse parallel zur Flugrichtung ausgerichtet ist. Jede der Kammern 18 hat an ihrer Vorderseite 20 eine Kammeröffnung 22, in die Luft einströmen kann. Die einzelnen Kammern 18 sind jeweils an ihrer Rückseite 24 verschlossen. Die Rückseiten 24 sind dabei beispielsweise vernäht, was allerdings in der Zeichnung nicht näher illustriert ist. Die einzelnen Kammern 18 sind jeweils durch Kammerseitenwände 26 voneinander getrennt. An der Unterseite der Schirmkappe 12 sind eine Vielzahl an Galerieleinen 28 angebracht, welche in den Knotenpunkten 30 zu Stammleinen 32 zusammenlaufen.

In der Fig. 2 ist ein Gleitschirm 10 wie in der Fig. 1 nach einem seitlichen Einklappen dargestellt. Der Seitenklapper ist hierbei möglicherweise durch Turbolenzen verursacht. Wie in der Fig. 2 dargestellt, ist etwa die Hälfte der Schirmkappe 12 eingeklappt, so dass die Manövrierfähigkeit des gesamten Gleitschirms 10 stark reduziert ist. In Folge des Strömungsabrisses kommt es häufig in diesem Zustand auch zu einer Trudelbewegung, wobei dies mit erheblichen Gefahren verbunden ist.

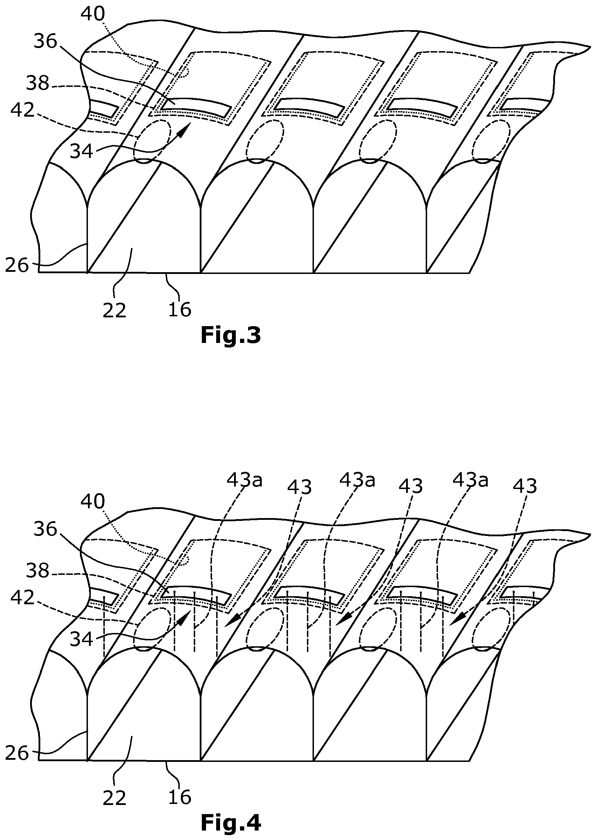

In der Fig. 3 ist ein Ausschnitt aus einem ersten Ausführungsbeispiel des erfindungsgemäßen Gleitschirms 10 mit einem Aufrichtmittel 34 zum Aufrichten der Schirmkappe 12 nach einem Klapper dargestellt. Dabei sind drei Kammern 18 abgebildet, die jeweils ein Aufrichtmittel 34, bestehend aus einer Lufteintrittsöffnung 36 und einem Verschlusstuch 38, aufweisen. Dabei ist jedes Verschlusstuch 38 durch eine Naht 40 mit dem Obersegel 14 verbunden. Die Naht 40 umgibt in diesem Ausführungsbeispiel die Lufteintrittsöffnung 36 von drei Seiten, nämlich von der Seite, die der Kammeröffnung zugewandt ist und den beiden Seiten, die den Seitenwänden 26 der Kammern 18 zugewandt sind. Eine Seite der Lufteintrittsöffnungen 36, die der Rückseite 24 der Kammer 18 zugewandt ist, ist offen gehalten und nicht vernäht, so dass die durch die Lufteintrittsöffnungen 36 einströmende Luft an dieser Seite entweichen kann und die eingeklappte Kammer 18 befüllt wird.

Darüber hinaus weisen die einzelnen Kammern 18 dieses Ausführungsbeispiels auch jeweils Luftdruckausgleichsöffnungen 42 auf, die jeweils in einer Seitenwand 26 einer Kammer 18 angebracht sind. Somit kann nach einem Einklappen der Schirmkappe 12 sowohl durch die Aufrichtmittel 34 als auch durch die Luftdruckausgleichsöffnung 42 die Kammern 18 wieder befüllt werden und somit die Aufrichtzeit der Schirmkappe 12 nach dem Einklappen reduziert werden. In diesem Ausführungsbeispiel sind die Lufteintrittsöffnungen 36 länglich bzw. schlitzförmig ausgeführt und orthogonal zur Längsachse der Kammern 18 angeordnet. Dies kann insbesondere bei Frontklappern zu einer effizienten Befüllung der Kammern 18 beitragen.

Dadurch, dass in diesem Ausführungsbeispiel das Verschlusstuch 38 an drei Seiten mit dem Obersegel 14 vernäht ist, erfolgt eine Kanalisierung der durch die Lufteintrittsöffnung 36 einströmenden Luft, so dass der mittlere und der hintere Teil der Kammern befüllt werden. Sind die Kammern 18 wieder durch die Aufrichtmittel 34 sowie durch die Luftdruckausgleichsöffnungen 42 gefüllt und die Schirmkappe 12 aufgerichtet, so kann wieder Luft durch die Kammeröffnung 22 in die Kammer 18 gelangen und der sich daraufhin aufbauende Staudruck bewirkt ein Verschließen der Lufteintrittsöffnung 36 durch das Verschlusstuch 38.

In der Fig. 4 ist ein Ausschnitt aus einem zweiten Ausführungsbeispiel des erfindungsgemäßen Gleitschirms 10 dargestellt. Bei diesem Ausführungsbeispiel wird ein zusätzliches Niederhaltemittel 43 eingesetzt, um zu verhindern, dass das Verschlusstuch 38 durch den Überdruck in der Kammer 18 nach außen gewölbt wird. Eine derartige Wölbung könnte die Aerodynamik des Gleitschirms 10 negativ beeinflussen. Das Niederhaltemittel 43 ist in diesem Ausführungsbeispiel als fadenförmiges Niederhaltemittel 43a ausgeführt. Das fadenförmige Niederhaltemittel 43a ist in diesem Ausführungsbeispiel an einer Seite mit dem Verschlusstuch 38 und an der gegenüberliegenden Seite mit dem Untersegel 16 verbunden. Ferner kann vorgesehen sein, dass das Niederhaltemittel 43 tuchförmig ausgeführt ist. Hierbei kann vorgesehen sein, dass das tuchförmige Niederhaltemittel 43, das in der Fig. 4 nicht abgebildet ist, aus dem gleichen Material gefertigt ist wie das Untersegel und/oder das Obersegel. Darüber hinaus kann vorgesehen sein, dass ein solches tuchförmiges Niederhaltemittel Öffnungen aufweist oder netzförmig ausgeführt ist, so dass die durch die Kammeröffnung 22 eintretende Luftströmung durch das tuchförmige Niederhaltemittel 43 möglichst wenig beeinflusst wird. Auch kann alternativ vorgesehen sein, dass das Niederhaltemittel 43 bandförmig ausgeführt ist. Die bandförmige Ausgestaltung des Niederhaltemittels 43 dient dazu, die Luftströmung durch die Kammeröffnung 22 im Vergleich zu einem tuchförmigen Niederhaltemittel wenig zu beeinflussen. Je nach Anforderung kann die Anzahl der bandförmigen Niederhaltemittel sowie deren Breite derart ausgewählt werden, dass die Wölbung des Verschlusstuchs 38 nach außen hin besonders stark reduziert wird und/oder die Luftströmung durch die Kammeröffnung 22 möglichst wenig beeinflusst wird. Auch die bandförmigen Niederhaltemittel können an einer Seite mit dem Verschlusstuch 38 und an der gegenüberliegenden Seite mit dem Untersegel verbunden sein. Die Verbindung kann vorzugsweise über Nähte erfolgen. Durch die Verwendung eines Niederhaltemittels 43 wird im Allgemeinen eine nach außen gerichtete Wölbung des Verschlusstuchs 38 verhindert oder zumindest reduziert.

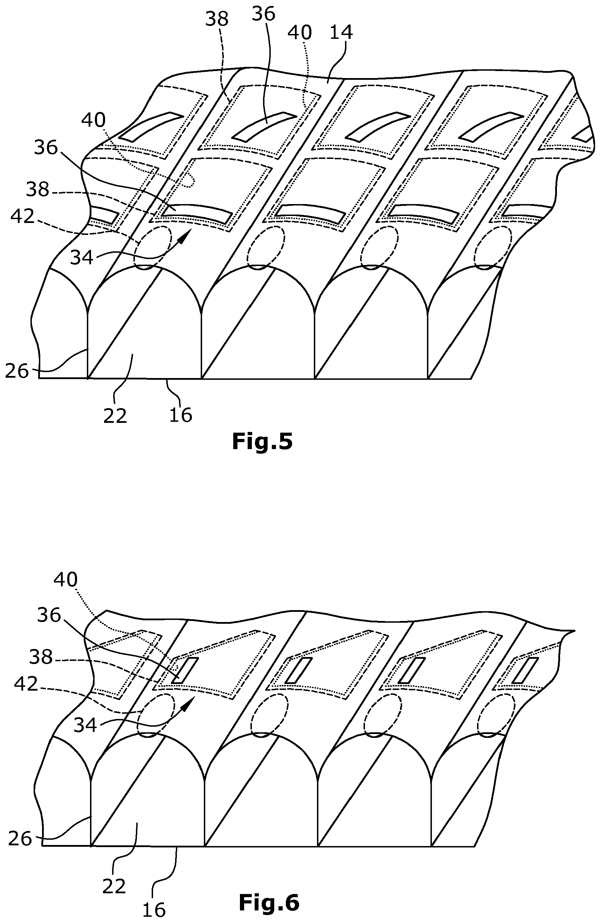

In der Fig. 5 ist ein Ausschnitt aus einer dritten Ausführungsform dargestellt, bei der jede der drei abgebildeten Kammern 18 zwei längliche Lufteintrittsöffnungen 36 und dementsprechend auch zwei Verschlusstücher 38 aufweist. Alternativ kann auch vorgesehen sein, dass nur ein Verschlusstuch 38 für den Verschluss von zwei oder auch mehr als zwei Lufteintrittsöffnungen 36 vorgesehen ist. Darüber hinaus sind die einzelnen länglichen Lufteintrittsöffnungen 36, welche die einzelnen Kammern 18 aufweisen, unterschiedlich ausgerichtet. Während die vorderen Lufteintrittsöffnungen 36 senkrecht zur Längsachse der Kammern 18 ausgerichtet sind, sind die hinteren Lufteintrittsöffnungen 36 in einem Winkel von im Wesentlichen 45 Grad zur Längsachse der Kammern 18 ausgerichtet. Dadurch wird erzielt, dass der Gleitschirm 10 für verschiedene Szenarien, d. h. für verschiedene Formen des Einklappens der Schirmkappe ausgelegt ist, und in diesen unterschiedlichen Szenarien ein optimales Befüllen der Kammern 18 und damit ein optimales Aufrichten der Schirmkappe 12 gewährleistet. Dabei können beispielsweise die vorderen Lufteintrittsöffnungen 36 insbesondere zum Aufrichten der Schirmkappe 12 nach Frontklappern und die hinteren Lufteintrittsöffnungen 36 besonders zum Aufrichten der Schirmkappe 12 nach Seitenklappern ausgelegt sein.

In der Fig. 6 ist ein Ausschnitt aus einem vierten Ausführungsbeispiel des erfindungsgemäßen Gleitschirms 10 dargestellt, wobei jede der drei abgebildeten Kammern 18 eine Lufteintrittsöffnung 36 aufweist, die parallel zur Längsachse der Kammern 18 ausgerichtet ist. Durch die Auslegung der Naht wird die durch die Lufteintrittsöffnung 36 einströmende Luft kanalisiert und in den mittleren und hinteren Bereich der Kammern 18 geleitet, wodurch, in Kombination mit den Luftdruckausgleichsöffnungen 42 eine beschleunigte Aufrichtung der Kammern 18 sowie der gesamten Schirmkappe 12 erfolgt.

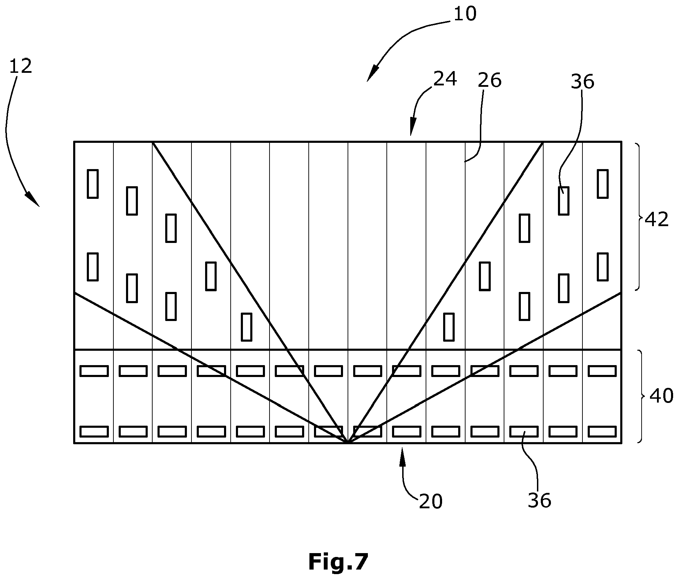

Schließlich ist in der Fig. 7 eine Draufsicht auf ein letztes Ausführungsbeispiel des erfindungsgemäßen Gleitschirms 10 dargestellt. Hierbei sind die Einklappbereiche 44 und 46 abgebildet, in denen es verhäuft zu Front- und Seitenklappern kommen kann und in welchen bevorzugt die Lufteintrittsöffnungen 36 vorgesehen sind. Diese Bereiche sind im Wesentlichen vom Typ und Design des Gleitschirms 10 abhängig.

In diesem Ausführungsbeispiel liegt ein Fronteinklappbereich 44 etwa im vorderen Drittel der Schirmkappe 12. Da in diesem Bereich vermehrt Frontklapper auftreten, können die im Wesentlichen senkrecht zur Längsachse der Kammern 18 verlaufenden, schlitzförmigen Lufteintrittsöffnungen 36 im Fronteinklappbereich 44 vorgesehen sein. Klappt die Schirmkappe 12 in diesem Fronteinklappbereich 44 entlang einer Klapplinie ein, die sich mit den Lufteintrittsöffnungen 36 einiger Kammern 18 schneidet, so werden diese Kammern besonders effizient mit Luft befüllt, da in diesem Fall die Luft senkrecht auf diese Lufteintrittsöffnungen 36 zuströmt.

Weiterhin ist ein Seiteneinklappbereich 46 dargestellt, in dem bei diesem Ausführungsbeispiel verhäuft Seitenklapper auftreten können. Im Seiteneinklappbereich 46 können daher bevorzugt Lufteintrittsöffnungen 36 angeordnet sein, die zur Aufrichtung der Schirmkappe 12 nach einem Seitenklapper vorgesehen sind. In diesem Ausführungsbeispiel sind mehrere schlitzförmige Lufteintrittsöffnungen 36 im Seiteneinklappbereich 46 angebracht, die parallel zur Längsachse der Kammern 18 verlaufen. Hierdurch ist die Wahrscheinlichkeit erhöht, dass eine oder mehrere Lufteintrittsöffnungen 36 entlang einer Einklapplinie verlaufen und dass dadurch die Luft senkrecht auf die Lufteintrittsöffnung 36 zuströmt, sodass die Kammern 18 nach einem Seitenklapper effizient befüllt werden können.

In den obigen Ausführungsbeispielen wurde der erfindungsgemäße Gleitschirm 10 und seine Funktionsweise anhand von Beispielen erläutert, in denen schlitzförmige Lufteintrittsöffnungen 36 verwendet wurden. Es sei an dieser Stelle noch einmal klargestellt, dass sich die Erfindung und die Ausführungsbeispiele nicht auf die Verwendung von schlitzförmigen Lufteintrittsöffnungen 36 beschränken. Auch die Anzahl der Lufteintrittsöffnungen 36 ist erfindungsgemäß nicht beschränkt.

### BEZUGSZEICHENLISTE

- 10: Gleitschirm
- 12: Schirmkappe
- 14: Obersegel
- 16: Untersegel
- 18: Kammer
- 20: Vorderseite der Kammer
- 22: Kammeröffnung
- 24: Rückseite der Kammer
- 26: Kammerseitenwand
- 28: Galerieleine
- 30: Knotenpunkt
- 32: Stammleine
- 34: Aufrichtmittel
- 36: Lufteintrittsöffnung
- 38: Verschlusstuch
- 40: Naht
- 42: Luftdruckausgleichsöffnung
- 43: Niederhaltemittel
- 43a: fadenförmiges Niederhaltemittel
- 44: Fronteinklappbereich
- 46: Seiteneinklappbereich

## Patentansprüche

1. Gleitschirm (10) mit
- einer Schirmkappe (12), die ein Obersegel (14) und ein Untersegel (16) aufweist, wobei die Schirmkappe (12) in mehrere längliche Kammern (18) mit einer Längsachse unterteilt ist, wobei jede Kammer (18) eine Vorderseite (20) mit einer Kammeröffnung (22), eine verschlossene Rückseite (24) und Seitenwände (26) aufweist; und
- einem Aufrichtmittel (34) zum automatischen Aufrichten der Schirmkappe (12) nach einem zumindest partiellen Einklappen der Schirmkappe (12);
- wobei das Aufrichtmittel (34) versehen ist mit
- mindestens einer Lufteintrittsöffnung (36) im Obersegel (14); und
- einem dieser mindestens einen Lufteintrittsöffnung (36) zugeordneten Verschlusstuch (38), das an der Unterseite des Obersegels (14) angeordnet und mit dem Obersegel (14) zumindest an derjenigen Seite der Lufteintrittsöffnung (36), die der Kammeröffnung (22) zugewandt ist, verbunden ist,
- wobei bei Eintritt von Luft durch die Kammeröffnung (22) einer mit einer Lufteintrittsöffnung (36) versehenen Kammer (18) das Verschlusstuch (38) die Lufteintrittsöffnung (36) wegen des Staudrucks in der Kammer (18) automatisch verschließt und
- wobei im Falle einer zumindest partiell eingeklappten Schirmkappe (26) infolge einer Verringerung des Staudrucks in der mit der Lufteintrittsöffnung (36) versehenen Kammer (18) das Verschlusstuch (38) die Lufteintrittsöffnung (36) zum Einströmen von Luft zwecks Wiederausbildung der Kammer (18) automatisch freigibt.

2. Gleitschirm (10) nach Anspruch 1, **dadurch gekennzeichnet, dass** mindestens eine Seitenwand (26) zumindest einer Kammer (18) mindestens eine Luftdruckausgleichsöffnung (42) aufweist.

3. Gleitschirm (10) nach den Ansprüchen 1 oder 2, **dadurch gekennzeichnet, dass** die mindestens eine Lufteintrittsöffnung (36) länglich ausgebildet ist.

4. Gleitschirm (10) nach Anspruch 3, **dadurch gekennzeichnet, dass** die mindestens eine längliche Lufteintrittsöffnung (36) im Wesentlichen parallel oder orthogonal zu der Längsachse der Kammern (18) ausgerichtet ist.

5. Gleitschirm (10) nach Anspruch 3, **dadurch gekennzeichnet, dass** die mindestens eine längliche Lufteintrittsöffnung (36) im Wesentlichen in einem Winkel von 45 Grad zu der Längsachse der Kammern (18) ausgerichtet ist.

6. Gleitschirm (10) nach den Ansprüchen 1 bis 5, **dadurch gekennzeichnet, dass** das Aufrichtmittel (34) mindestens zwei längliche Lufteintrittsöffnungen (36) und zwei Verschlusstücher aufweist, wobei die Ausrichtung und/oder die Form der mindestens zwei Lufteintrittsöffnungen (36) voneinander abweicht/abweichen.

7. Gleitschirm (10) nach den Ansprüchen 1 bis 6, **dadurch gekennzeichnet, dass** das mindestens eine Verschlusstuch (38) mindestens an einer Seite der Lufteintrittsöffnung (36) mit dem Obersegel (14) verbunden ist, die einer Seitenwand (26) der Kammer (18) zugewandt ist.

8. Gleitschirm (10) nach den Ansprüchen 1 bis 7, **dadurch gekennzeichnet, dass** das mindestens eine Verschlusstuch (38) an den beiden Seiten, die den Seitenwänden (26) der Kammer (18) zugewandt sind, mit dem Obersegel (14) verbunden ist.

9. Gleitschirm (10) nach den Ansprüchen 1 bis 8, **dadurch gekennzeichnet, dass** das Verschlusstuch (38) an mindestens einer seiner Seiten mit dem Obersegel (14) vernäht ist.

10. Gleitschirm (10) nach den Ansprüchen 1 bis 9, **dadurch gekennzeichnet, dass** das Verschlusstuch (38) mit dem Obersegel (14) an mindestens einer seiner Seiten verschweißt ist.

11. Gleitschirm (10) nach den Ansprüchen 1 bis 10, **dadurch gekennzeichnet, dass** das Verschlusstuch (38) mit dem Obersegel (14) an mindestens einer seiner Seiten verklebt ist.

12. Gleitschirm (10) nach den Ansprüchen 1 bis 11, **dadurch gekennzeichnet, dass** das Verschlusstuch (38) das gleiche Material wie das Obersegel (14) aufweist.

13. Gleitschirm (10) nach den Ansprüchen 1 bis 11, **dadurch gekennzeichnet, dass** das Verschlusstuch (38) ein anderes Material als das Obersegel (14) aufweist.

14. Gleitschirm (10) nach den Ansprüchen 1 bis 13, **dadurch gekennzeichnet, dass** ein Verschlusstuch (38) für mehrere Lufteintrittsöffnungen (36) vorgesehen ist.

15. Gleitschirm (10) nach den Ansprüchen 1 bis 14, **dadurch gekennzeichnet, dass** mehrere und insbesondere sämtliche Kammern (18) mit jeweils mindestens einer Lufteintrittsöffnung (36) und einem Verschlusstuch (38) versehen sind, und dass die Lufteintrittsöffnungen (36) in denjenigen Bereichen des Obersegels (14) angeordnet sind, in denen die Schirmkappe (12) bei einem potentiellen zumindest partiellen Einklappen umgefaltet ist.

## Claims

1. Paraglider (10) comprising
- a canopy (12) having a top sail (14) and a bottom sail (16), the canopy (12) being divided into a plurality of elongate chambers (18) having a longitudinal axis, each chamber (18) having a front side (20) with a chamber opening (22), a closed rear side (24) and sidewalls (26); and
- an uprighting means (34) for the automatic uprighting of the canopy 12) after an at least partial collapse of the canopy (12);
- the uprighting means (34) being provided with
- at least one air inlet opening (36) in the top sail (14); and
- a closing cloth (38) associated to said at least one air inlet opening (36), said cloth being arranged on the bottom side of the top sail (14) and connected to the top sail (14) at least on that side of the air inlet opening (36) that faces the chamber opening (22),
- wherein upon entry of air through the chamber opening (22) of a chamber (18) provided with an air inlet opening (36), the closing cloth (38) automatically closes the air inlet opening (36) due to the dynamic pressure in the chamber (18), and
- wherein in case of an at least partially collapsed canopy (12) due to a decrease in dynamic pressure in the chamber (18) provided with the air inlet opening (36), the closing cloth (38) automatically clears the air inlet opening (36) so that air flows in to re-form the chamber (18).

2. Paraglider (10) of claim 1, **characterized in that** at least one sidewall (26) of at least one chamber (18) has at least one air pressure compensation opening (42).

3. Paraglider (10) of claims 1 or 2, **characterized in that** the at least one air inlet opening (36) is of an elongate shape.

4. Paraglider of claim 3, **characterized in that** the at least one elongate air inlet opening (36) is directed substantially parallel or orthogonal to the longitudinal axis of the chambers (18).

5. Paraglider (10) of claim 3, **characterized in that** the at least one elongate air inlet opening (36) is directed substantially under an angle of 45 degrees with respect to the longitudinal axis of the chambers (18).

6. Paraglider (10) of claims 1 to 5, **characterized in that** the uprighting means (34) comprises at least two elongate air inlet openings (36) and two closing cloths, the orientation and/or the shape of the at least two air inlet openings (36) differing from each other.

7. Paraglider (10) of claims 1 to 6, **characterized in that** the at least one closing cloth (38) is connected to the top sail (14) on at least one side of the air inlet opening (36), which faces a sidewall (26) of the chamber (18).

8. Paraglider (10) of claims 1 to 7, **characterized in that** the at least one closing cloth (38) is connected to the top sail (14) on those two sides which face the sidewalls (276) of the chamber (18).

9. Paraglider (10) of claims 1 to 8, **characterized in that** the closing cloth (38) is sewn to the top sail (14) on at least one of its sides.

10. Paraglider (10) of claims 1 to 9, **characterized in that** the closing cloth (38) is welded to the top sail (14) on at least one of its sides.

11. Paraglider (10) of claims 1 to 10, **characterized in that** the closing cloth (38) is glued to the top sail (14) on at least one of its sides.

12. Paraglider (10) of claims 1 to 11, **characterized in that** the closing cloth (38) comprises the same material as the top sail (14).

13. Paraglider (10) of claims 1 to 11, **characterized in that** the closing cloth (38) comprises a material different from that of the top sail (14).

14. Paraglider (10) of claims 1 to 13, **characterized in that** one closing cloth (38) is provided for a plurality of air inlet openings (36).

15. Paraglider (10) of claims 1 to 14, **characterized in that** a plurality and in particular all chambers (18) are provided, respectively, with at least one air inlet opening (36) and a closing cloth (38), and that the air inlet openings (36) are arranged in those regions of the top sail (14) in which the canopy (12) is folded over in case of a potential, at least partial collapse.

## Revendications

1. Parapente (10) doté
- d'une aile (12), laquelle comporte un extrados (14) et un intrados (16), dans lequel l'aile (12) est divisée en plusieurs compartiments (18) allongés avec un axe longitudinal, dans lequel chaque compartiment (18) comporte une face avant (20) avec une ouverture de compartiment (22), une face arrière fermée (24) et des parois latérales (26) ; et
- d'un moyen de redressement (34) destiné à redresser automatiquement l'aile (12) après un rabattement au moins partiel de l'aile (12) ;
- dans lequel le moyen de redressement (34) est prévu comme doté
∘ d'au moins une ouverture d'entrée d'air (36) dans l'extrados (14) ; et
∘ d'une étoffe d'obturation (38) ordonnée à cette au moins une ouverture d'entrée d'air (36), laquelle est agencée sur la face inférieure de l'extrados (14) et est raccordée à l'extrados (14) au moins sur la face de l'ouverture d'entrée d'air (36) tournée vers l'ouverture de compartiment (22),
- dans lequel, lors de l'entrée d'air à travers l'ouverture de compartiment (22) d'un compartiment (18) prévu doté d'une ouverture d'entrée d'air (36), l'étoffe d'obturation (38) obture automatiquement l'ouverture d'entrée d'air (36) contre la pression dynamique dans le compartiment (18) et
- dans lequel, dans le cas d'une aile (12) au moins partiellement rabattue à la suite d'une diminution de la pression dynamique dans le compartiment (18) prévu doté de l'ouverture d'entrée d'air (36), l'étoffe d'obturation (38) libère automatiquement l'ouverture d'entrée d'air (36) afin de laisser entrer de l'air en vue d'une reformation du compartiment (18).

2. Parapente (10) d'après la revendication 1, **caractérisé en ce qu'**au moins une paroi latérale (26) d'au moins un compartiment (18) comporte au moins une ouverture de compensation de pression atmosphérique (42).

3. Parapente (10) d'après la revendication 1 ou 2, **caractérisé en ce que** l'au moins une ouverture d'entrée d'air (36) est réalisée de manière oblongue.

4. Parapente (10) d'après la revendication 3, **caractérisé en ce que** l'au moins une ouverture d'entrée d'air oblongue (36) est orientée essentiellement de manière parallèle ou orthogonale à l'axe longitudinal des compartiments (18).

5. Parapente (10) d'après la revendication 3, **caractérisé en ce que** l'au moins une ouverture d'entrée d'air oblongue (36) est orientée essentiellement avec un angle de 45° par rapport à l'axe longitudinal des compartiments (18) .

6. Parapente (10) d'après l'une des revendications 1 à 5, **caractérisé en ce que** le moyen de redressement (34) comporte au moins deux ouvertures d'entrée d'air oblongues (36) et deux étoffes d'obturation, dans lequel l'orientation et/ou la forme des au moins deux ouvertures d'entrée d'air oblongues (36) diffèrent l'une de l'autre.

7. Parapente (10) d'après l'une des revendications 1 à 6, **caractérisé en ce que** l'au moins une étoffe d'obturation (38) est reliée à l'extrados (14) au moins sur un côté de l'ouverture d'entrée d'air (36) faisant face à une paroi latérale (26) du compartiment (18).

8. Parapente (10) d'après l'une des revendications 1 à 7, **caractérisé en ce que** l'au moins une étoffe d'obturation (38) est reliée à l'extrados (14) sur les deux côtés de l'ouverture d'entrée d'air (36) faisant face à une paroi latérale (26) du compartiment (18).

9. Parapente (10) d'après l'une des revendications 1 à 8, **caractérisé en ce que** l'étoffe d'obturation (38) est cousue à l'extrados (14) sur au moins un de ses côtés.

10. Parapente (10) d'après l'une des revendications 1 à 9, **caractérisé en ce que** l'étoffe d'obturation (38) est soudée à l'extrados (14) sur au moins un de ses côtés.

11. Parapente (10) d'après l'une des revendications 1 à 10, **caractérisé en ce que** l'étoffe d'obturation (38) est collée à l'extrados (14) sur au moins un de ses côtés.

12. Parapente (10) d'après l'une des revendications 1 à 11, **caractérisé en ce que** l'étoffe d'obturation (38) comporte le même matériau que l'extrados (14).

13. Parapente (10) d'après l'une des revendications 1 à 11, **caractérisé en ce que** l'étoffe d'obturation (38) comporte un autre matériau que l'extrados (14).

14. Parapente (10) d'après l'une des revendications 1 à 13, **caractérisé en ce qu'**une étoffe d'obturation (38) est prévue pour plusieurs ouvertures d'entrée d'air (36).

15. Parapente (10) d'après l'une des revendications 1 à 14, **caractérisé en ce que** plusieurs et en particulier tous les compartiments (18) sont prévus dotés respectivement d'au moins une ouverture d'entrée d'air (36) et d'une étoffe d'obturation (38), et **en ce que** les ouvertures d'entrée d'air (36) sont agencées dans les zones de l'extrados (14) à l'intérieur desquelles l'aile (12) est pliée lors d'un potentiel rabattement au moins partiel.
